# EUROPEAN PATENT APPLICATION

(11) **EP 4 589 734 A1**
(43) Date of publication of application: **23.07.2025**
(21) Application number: 24207430.0
(22) Date of filing: 18.10.2024
(51) Int. Cl.: H01M 10/613, H01M 10/643, H01M 10/6557, H01M 50/213, H01M 50/291

(54) **BATTERY MODULE AND BATTERY PACK**

(30) Priority: 17.01.2024 CN 202420123161 U
(71) Applicant: AESC Japan Ltd., Yokohama-Shi, Kanagawa 220-0012 (JP)
(72) Inventor: SHI, Bowen, Kangqiao Town, Pudong New Area Shanghai, 201315 (CN); HE, Yafei, Kangqiao Town, Pudong New Area Shanghai, 201315 (CN)
(74) Representative: Becker, Eberhard

(57) **Abstract**

Abattery module and a battery pack are provided. A battery module (100), includes a housing (10), comprising a bottom plate, side plates, a top plate, and end plates, wherein the top plate is fixedly connected to the bottom plate, the side plates, and the end plates sequentially to enclose and form a containing cavity; a fixing bracket (20) located in the containing cavity and mounted on the bottom plate; a battery cell stack (30), comprising cylindrical battery cells arranged in a plurality of rows, wherein a top portion of each of the cylindrical battery cells is provided with an electrode terminal; a cell contact system (CCS) component (40), disposed on a side of the battery cell stack (30) close to the top plate, and electrically connected to the electrode terminals of the cylindrical battery cells; and a serpentine cooling plate (50) disposed between two rows of cylindrical battery cells.

## Description

### BACKGROUND

### Technical Field

The disclosure relates to the technical field of cylindrical battery cell of battery module, and specifically relates to a battery module and a battery pack.

### Description of Related Art

Power batteries are the source of power for electric vehicles. Power batteries with CTP (cell to pack) structure are a common power battery structure. Power battery CTP technology directly connects a large number of cylinder cells in series and parallel by omitting modules. For CTP structures that use cylindrical battery cells, the assembly process of the CTP structure includes first arranging multiple cylindrical battery cells in groups to form a battery group, and then potting the battery cell group with glue in the casing of the battery pack. However, due to the large number of single cylindrical battery cells in the CTP structure, the grouping process is complicated and potting the whole package with glue is difficult. In addition, the current CTP structure form of cylindrical battery cell generally has the problem of difficulty in repair. For example, if there is a quality problem with a single cylindrical battery cell, the entire battery pack may need to be disassembled.

### SUMMARY

In view of the above shortcomings of the related art, the purpose of this disclosure is to provide a battery module and battery pack to relieve problems existing in the current CTP structure form of the cylindrical battery cell, for example, the grouping process is complicated, the whole pack is difficult to glue, and it is difficult to repair.

In order to achieve the above purpose and other related purposes, this disclosure proposes a battery module, which includes the following.

A housing includes a bottom plate, side plates, a top plate, and end plates, wherein the side plates are arranged on opposite two sides of the bottom plate, the end plates are arranged on other two sides of the bottom plate, and the top plate is fixedly connected to the side plates and the end plates to enclose and form a containing cavity.

A fixing bracket is located in the containing cavity and mounted on the bottom plate, in which a plurality of rows of positioning grooves are disposed on the fixing bracket.

A battery cell stack includes cylindrical battery cells arranged in a plurality of rows, in which a top portion of each of the cylindrical battery cells is provided with an electrode terminal, a bottom portion of each of the cylindrical battery cells is provided with an venting valve, and the bottom portions of the cylindrical battery cells are installed in the positioning grooves.

A cell contact system (CCS) component is disposed on a side of the battery cell stack close to the top plate, and electrically connected to the electrode terminals of the cylindrical battery cells.

A serpentine cooling plate is disposed between two rows of cylindrical battery cells.

In an embodiment of the disclosure, the side plates and the bottom plates are an integrated frame structure formed in a U-shape.

In an embodiment of the disclosure, an exhaust channel is formed between the fixing bracket and the bottom plate, and the exhaust channel communicates with the positioning grooves.

In an embodiment of the disclosure, at least one of the two end plates on the two sides of the bottom plate is provided with an exhaust slot, and the exhaust slot communicates with the exhaust channel.

In an embodiment of the disclosure, one of the two end plates on the two sides of the bottom plate is provided with a low-voltage signal collection terminal, the other of the two end plates on the two sides of the bottom plate is provided with a high-voltage output terminal, and the low-voltage signal collection terminal and the high-voltage output terminal are electrically connected to the CCS component respectively.

In an embodiment of the disclosure, the exhaust slot is disposed on the end plate provided with the low-voltage signal collection terminal.

In an embodiment of the disclosure, a plurality of protrusion structures are provided on a side of the fixing bracket close to the bottom plate, the exhaust channel is formed between adjacent two of the protrusion structures and the bottom plate, and the positioning grooves are located between the adjacent two of the protrusion structures.

In an embodiment of the disclosure, each of the positioning groove includes a through hole and a recess, the recess is located on a side of the fixing bracket away from the bottom plate, and the recess is arranged around the through hole. The bottom portions of the cylindrical battery cells are disposed in the recess, and the venting valves correspond to the through holes.

In an embodiment of the disclosure, the serpentine cooling plate includes the following.

A first cooling channel is disposed in a wing plate, and the wing plate is disposed between the battery cell stack and the end plate.

A plurality of sub-plates are disposed on the same side of the wing plate and connected to the wing plate, and each sub-plate is located between two rows of cylindrical battery cells. A second cooling channel is disposed in the sub-plate, and the second cooling channel communicates with the first cooling channel.

In an embodiment of the disclosure, an inlet water-cooling connector and an outlet water-cooling connector are further included. The inlet water-cooling connector and the outlet water-cooling connector are disposed on the wing plate, an end of the inlet water-cooling connector and the outlet water-cooling connector passes through the end plate and is located outside of the housing, and another end of the inlet water-cooling connector and the outlet water-cooling connector communicates with the first cooling channel respectively.

The disclosure also proposes a battery pack, which includes at least one battery module as described in any one of the above embodiments.

The disclosure proposes a battery module and a battery pack. Compared with the conventional CTP structure, the battery module and the battery pack comprising the module have a simple manufacturing process, thereby large-scale production is facilitated. At the same time, the size of the battery module may be designed according to needs, so that the applicable range can be wide.

The disclosure proposes a battery module and battery pack, by stacking a small number of single cylindrical battery cells to form a battery cell stack, and disposing the stack in the containing cavity of the housing, the number of single cylindrical battery cells is reduced, and glue potting of the small module is realized, thereby the problem of difficulty in potting the whole pack with glue in the CTP structure is solved. At the same time, the battery module is provided with structures such as the cooling plate and the fixing bracket, so that the battery module is well integrated.

The disclosure proposes a battery module and battery pack, which positions the cylindrical battery cells through the fixing bracket disposed in the module, and the problem of difficulty in positioning of the cylindrical battery cells in the CTP structure is solved, thereby the difficulty of the manufacturing process is reduced. At the same time, the exhaust channel is formed between the fixing bracket and the bottom plate to provide an exhaust channel when the module generates thermal runaway of the battery cell, thereby improving the safety and avoiding affecting battery cells in other modules.

The disclosure proposes a battery module and a battery pack, through forming the battery pack by the battery module, when a battery cell in one of the battery modules has a quality problem or thermal runaway, merely the battery module with the problem needs to be repaired or replaced, and the convenience of overall maintenance is improved.

### BRIEF DESCRIPTION OF THE DRAWINGS

In order to illustrate the technical solution according to the embodiments of the disclosure clearly, the drawings needed to describe the embodiments will be briefly introduced below. Certainly, the drawings in the following description are merely some embodiments of the disclosure. For persons of ordinary skill in the art, other drawings may be obtained based on the drawings without exerting creative efforts.
Figure 1 is a schematic view of a structure of a battery module according to an embodiment of the disclosure.
Figure 2 is a schematic exploded view of the structure of the battery module according to an embodiment of the disclosure.
Figure 3 is a partial schematic exploded view of the structure of the battery module according to an embodiment of the disclosure.
Figure 4 is a schematic structural view of a battery cell stack and a fixing bracket of the battery module according to an embodiment of the disclosure.
Figure 5 is a schematic cross-sectional view of the structure of the battery module according to an embodiment of the disclosure.
Figure 6 is a schematic view of a structure of a bottom surface of the fixing bracket of the battery module according to an embodiment of the disclosure.
Figure 7 is a schematic view of a structure of a front surface of the fixing bracket of the battery module according to an embodiment of the disclosure.
Figure 8 is a schematic view of installing an output terminal of the battery module according to an embodiment of the disclosure.
Figure 9 is a schematic view of a structure of a first end plate of the battery module according to an embodiment of the disclosure.
Figure 10 is a schematic cross-sectional view of the structure of the first end plate of the battery module according to an embodiment of the disclosure.

### DESCRIPTION OF THE EMBODIMENTS

The following describes the implementation of the disclosure through specific examples. Persons skilled in the art may easily understand other advantages and effects of the disclosure from the content disclosed in this specification. The disclosure may also be implemented or applied through other different specific implementations. Various details in this specification may also be modified or changed in various ways based on different viewpoints and applications without departing from the spirit of the disclosure.

It should be noted that the drawings provided in the embodiments merely illustrate the basic concept of the disclosure in a schematic manner, the drawings merely show components related to the disclosure and are not drawn according to the number, shape, and size of components during actual implementation. The type, quantity, and proportion of each component during actual implementation may be changed at will, and the component layout type may also be complex.

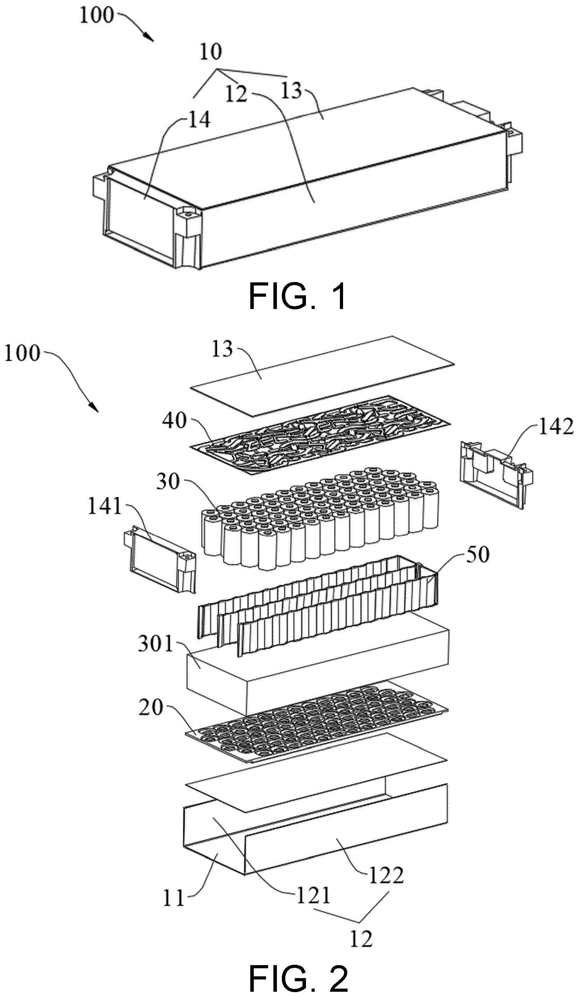

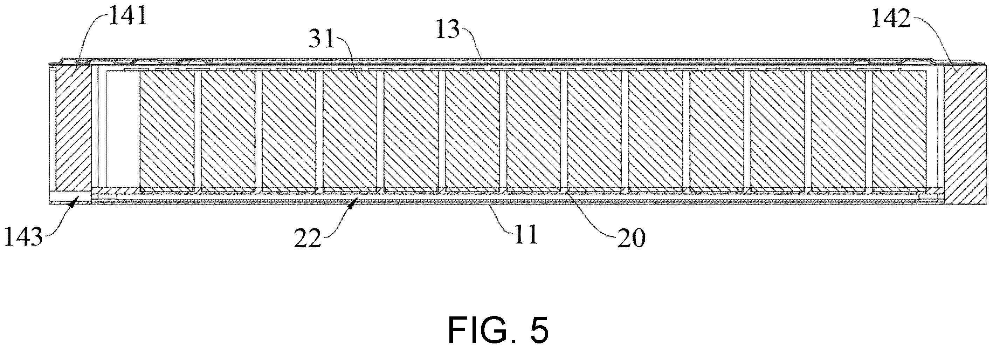

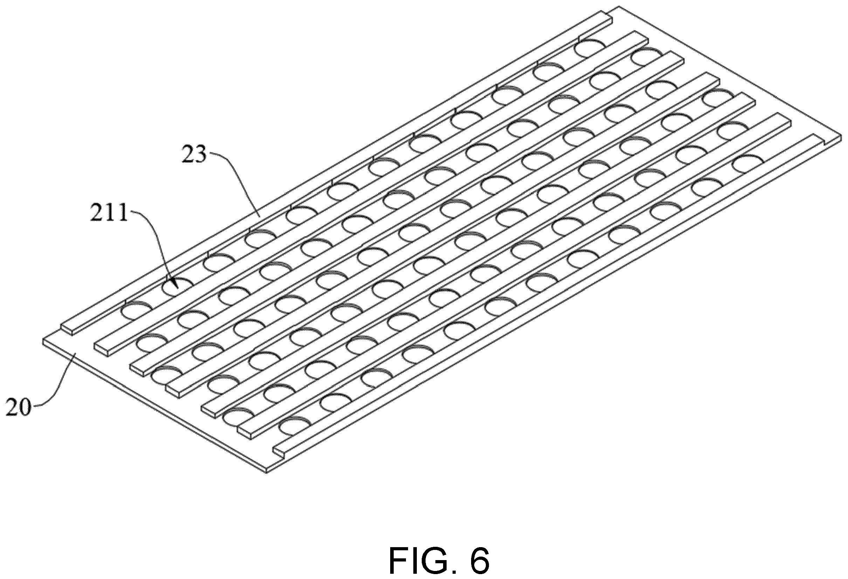

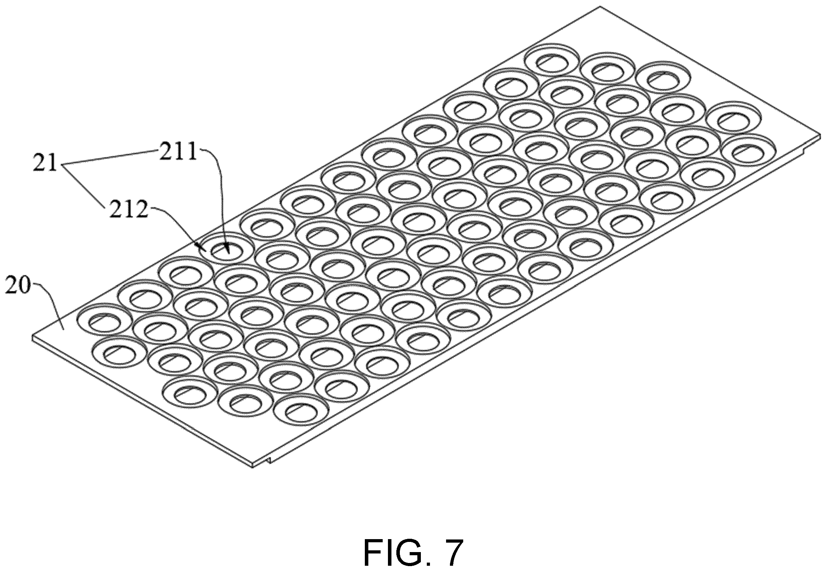

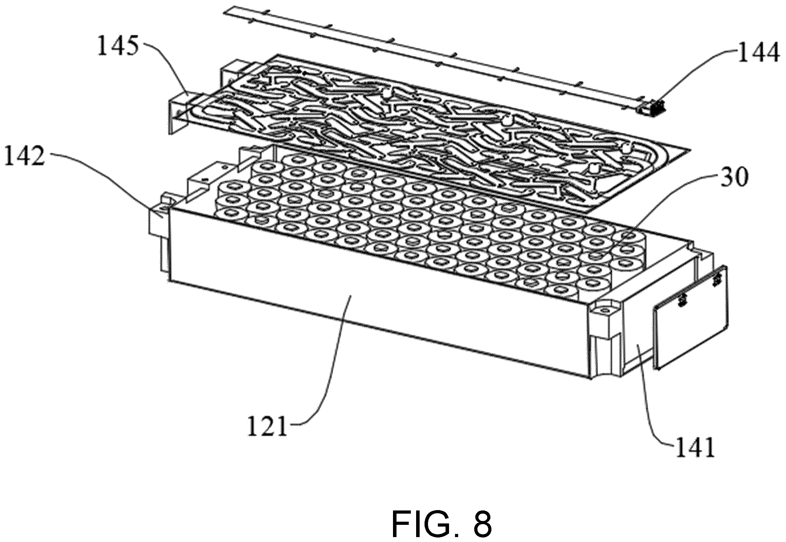

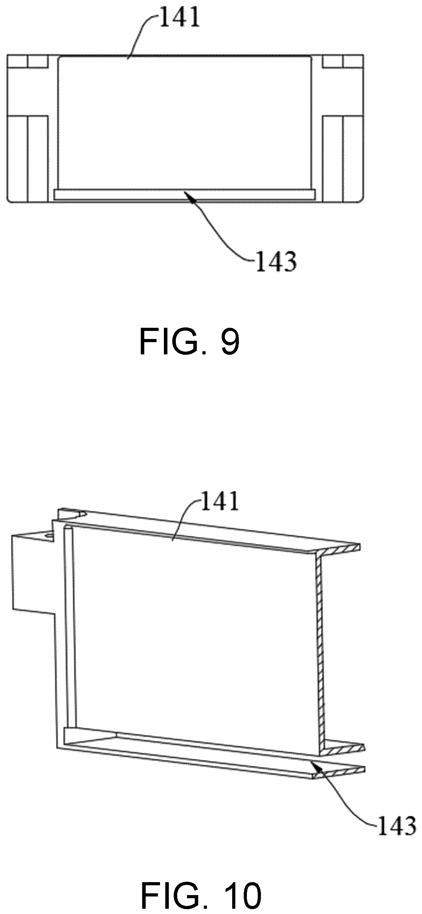

Please refer to Figures 1 to 10. This disclosure proposes a battery module and a battery pack to relieve problems existing in the current CTP structure form of the cylindrical battery cell, for example, the grouping process is complicated, the whole pack is difficult to glue, and it is difficult to repair. For example, if there is a quality problem with a single cylindrical battery cell, the safety of the entire battery pack is affected, or even the entire battery pack is to be scrapped. Specifically, as shown in the drawings, a battery module 100 includes a housing 10, a fixing bracket 20, a battery cell stack 30, a CCS (cell contact system) component 40, and a serpentine cooling plate 50. A containing cavity is formed in the housing 10, and the fixing bracket 20 is disposed in the containing cavity and located at the bottom portion of the containing cavity. The battery cell stack 30 includes cylindrical battery cells 31 arranged in multiple rows, the battery cell stack 30 is disposed on the fixing bracket 20, and the fixing bracket 20 is used to position and fix each cylindrical battery cell 31. The CCS component 40 is disposed on a side of the battery cell stack 30 away from the fixing bracket 20 and is electrically connected to the cylindrical battery cells 31. The serpentine cooling plate 50 is disposed between two rows of cylindrical battery cells 31 to dissipate heat for the cylindrical battery cells 31. That is, the battery module 100 is provided with structures such as the serpentine cooling plate 50 and the fixing bracket 20, so that the battery module 100 is well integrated.

Please refer to Figures 1 to 3. In this embodiment, the top portion of each cylindrical battery cell 31 is provided with an electrode terminal 311, and the bottom portions of the cylindrical battery cells 31 are provided with venting valves. For example, the cylindrical battery cells 31 include the electrode terminals 311, the venting valves, and casings 312. The electrode terminal 311 is disposed on the top portion of the casing 312, and the venting valve is disposed at the bottom portion of the casing 312, so as to achieve thermoelectric separation. In this embodiment, the battery cell stack 30 is formed by stacking multiple rows of cylindrical battery cells 31, each row of cylindrical battery cells 31 includes a plurality of single cylindrical battery cells 31, which are potted and filled on the outside of each cylindrical battery cell 31 through potting glue 301, so as to fix the plurality of single cylindrical battery cells 31 together to form the battery cell stack 30. The potting glue 301 may ensure the overall structural strength and stability. Also, the quantity of single cylindrical battery cells in the disclosure is small, and glue potting of the small module can be realized, thereby the problem of difficulty in potting the whole pack with glue in the CTP structure is solved, so as to reduce the difficulty of the manufacturing process. It may be understood that the shape of the potting glue 301 shown in the figure is merely a schematic view and not a real shape. In this embodiment, the CCS component 40 is disposed on a side of the battery cell stack 30 close to a top plate 13, and is electrically connected to the electrode terminals 311 of the cylindrical battery cells 31.

Please refer to Figures 1 to 3. In this embodiment, the housing 10 includes a bottom plate 11, side plates 12, the top plate 13, and end plates 14. The side plates 12 are arranged on opposite two sides of the bottom plate 11, the end plates 14 are arranged on other two sides of the bottom plate 11. The top plate 13 is fixedly connected to the side plates 12, and the end plates 14 to enclose and form a containing cavity. For example, the bottom plate 11, the side plates 12, the top plate 13, and the end plates 14 may be fixedly connected by welding or buckling. Specifically, the side plates 12 include a first side plate 121 and a second side plate 122, the end plates 14 include a first end plate 141 and a second end plate 142, the first side plate 121 and the second side plate 122 are fixedly connected on the two opposite sides of the bottom plate 11, and the first end plate 141 and the second end plate 142 are disposed on the other two sides of the bottom plate 11. The top plate 13 is sequentially connected with the first side plate 121, the second side plate 122, the first end plate 141, and the second end plate 142 to surround and form the containing cavity. In this embodiment, the first side plate 121, the second side plate 122, and the bottom plate 11 are an integrated structure, that is, the first side plate 121, the second side plate 122, and the bottom plate 11 may be integrated into an integrated frame structure formed in a U-shape.

Please refer to Figures 2 to 4. In this embodiment, there are multiple rows of positioning grooves 21 disposed on the fixing bracket 20, and each positioning groove 21 in each row is provided with a cylindrical battery cell 31 correspondingly. When the battery cell stack 30 is installed on the fixing bracket 20, the bottom portions of the cylindrical battery cells 31 disposed with the venting valves are installed in the corresponding positioning grooves 21, so as to realize the positioning and installation of the cylindrical battery cells 31. By positioning the cylindrical battery cells 31 through disposing the fixing bracket 20 in the module, the problem of difficulty in positioning of the cylindrical battery cells in the CTP structure is solved, thereby the difficulty of the manufacturing process is reduced.

Please refer to Figures 2 to 6. In this embodiment, the fixing bracket 20 is disposed on the bottom plate 11, an exhaust channel 22 is formed between the fixing bracket 20 and the bottom plate 11, and the exhaust channel 22 communicates with the positioning groove 21. Specifically, multiple protrusion structures 23 are disposed on a side of the fixing bracket 20 close to the bottom plate 11, the exhaust channel 22 is formed between two adjacent protrusion structures 23 and the bottom plate 11, and the positioning groove 21 is located between the two adjacent protrusion structures 23 to avoid blocking the positioning groove 21, thereby affecting the opening and exhausting of the venting valve during thermal runaway. When the cylindrical battery cell 31 undergoes the thermal runaway, exhausted gas enters the exhaust channel 22 and is discharged to outside through the exhaust channel 22, thereby the chain reaction of the thermal runaway is avoided, and the safety of the battery module 100 is improved.

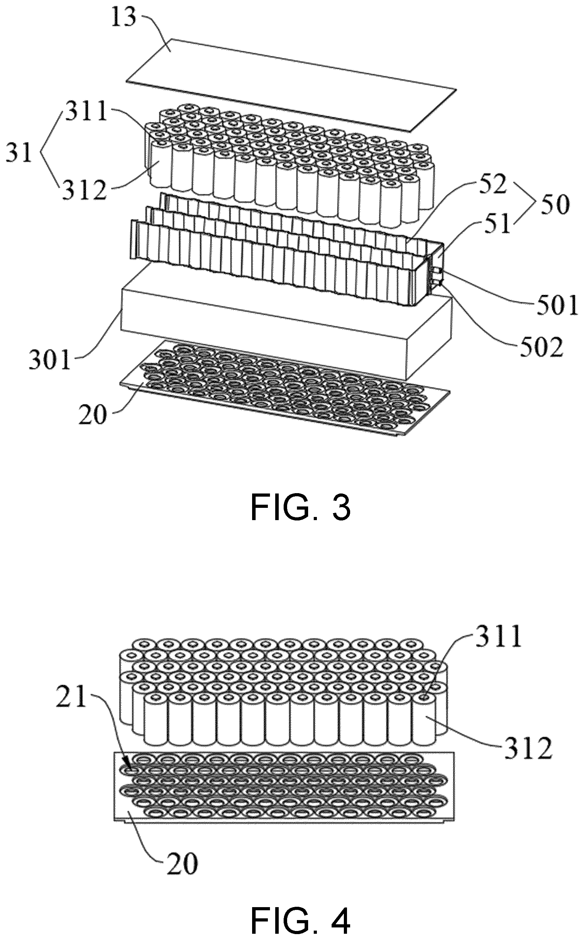

Please refer to Figures 4 to 7. In this embodiment, the positioning groove 21 includes a through hole 211 and a recess 212. The through hole 211 communicates with the exhaust channel 22. The recess 212 is disposed on a side of the fixing bracket 20 away from the bottom plate 11, and the recess 212 is arranged around the through hole 211. When the cylindrical battery cells 31 are installed in the positioning groove 21, the bottom portions of the cylindrical battery cells 31 disposed with the venting valves are located in the recess 212, and the venting valve corresponds to the through hole 211. When the cylindrical battery cell 31 undergoes the thermal runaway, the exhausted gas enters the exhaust channel 22 through the through hole 211 and is discharged to outside through the exhaust channel 22, thereby the chain reaction of the thermal runaway is avoided, and the safety of the battery module 100 is improved.

Please refer to Figure 2, Figure 5, and Figure 8 to Figure 10. In this embodiment, one of the two end plates 14 on the two opposite sides of the housing 10 is provided with a low-voltage signal collection terminal 144, the other is provided with a high-voltage output terminal 145, and the low-voltage signal collection terminal 144 and the high-voltage output terminal 145 are electrically connected to the CCS component 40 respectively. For example, the low-voltage signal collection terminal 144 may be disposed on the first end plate 141, and the high-voltage output terminal 145 may be disposed on the second end plate 142, so as to separate the high-voltage output and the low-voltage signal collection, thereby the safety of the battery output is improved. In this embodiment, there is an exhaust slot 143 disposed at the bottom portion of at least one of the two end plates 14 disposed on the two opposite sides of the housing 10. That is, at least one of the first end plate 141 and the second end plate 142 is provided with the exhaust slot 143, and the exhaust slot 143 communicates with the exhaust channel 22, so as to exhaust gas generated from the thermal runaway to the outside of the battery module 100. Preferably, the exhaust slot 143 is disposed on the end plate 14 disposed with the low-voltage signal collection terminal 144. For example, the exhaust slot 143 is disposed on the bottom portion of the first end plate 141, and communicates with the exhaust channel 22, so that the high-voltage connection is separated from the exhausted gas of the thermal runaway, thereby the safety of the battery module 100 is improved.

Please refer to Figure 2 and Figure 3. In this embodiment, the serpentine cooling plate 50 is disposed between two rows of cylindrical battery cells 31, and the serpentine cooling plate 50 is attached to part of the surface of the casing 312, so as to realize heat dissipation for the cylindrical battery cells. In this embodiment, the serpentine cooling plate 50 includes a wing plate 51 and a plurality of sub-plates 52. The wing plate 51 is disposed between the battery cell stack 30 and one of the end plates 14. The plurality of sub-plates 52 are disposed on the same side of the wing plate 51, and connected to the wing plate 51. Also, each sub-plate 52 is disposed between two rows of cylindrical battery cells 31, for example, one sub-plate 52 may be disposed every other row, every two rows, or every other number of rows. That is, the quantity of sub-plates 52 may be adjusted according to the quantity of cylindrical battery cells 31 to improve the applicable range. In this embodiment, a first cooling channel is disposed in the wing plate 51, a second cooling channel is disposed in each sub-plate 52, and the first cooling channel communicates with the second cooling channel. In this embodiment, the battery module 100 further includes an inlet water-cooling connector 501 and an outlet water-cooling connector 502. The inlet water-cooling connector 501 and the outlet water-cooling connector 502 are disposed on the wing plate 51, an end of the inlet water-cooling connector 501 and the outlet water-cooling connector 502 passes through the end plate 14 to be led to the outside of the housing 10, and another end communicates with the first cooling channel of the wing plate 51 respectively. The battery module 100 is integrated with a cooling plate and a water-cooling connector, so that the battery module 100 is well integrated.

Please refer to Figures 1 to 10. The disclosure also proposes a battery pack. The battery pack includes at least one battery module 100, and the battery module 100 has the same or similar structure as the battery module 100 described in the above embodiments. To avoid repetition, details will not be repeated here. Through forming the battery pack by the battery module, when a battery cell in one of the battery modules 100 has a quality problem or thermal runaway, merely the battery module 100 with the problem needs to be repaired or replaced, and the convenience of overall maintenance is improved.

The disclosure proposes a battery module and a battery pack. Compared with the conventional CTP structure, the battery module and the battery pack comprising the module have a simple manufacturing process, thereby large-scale production is facilitated. At the same time, the size of the battery module may be designed according to needs, so that the applicable range can be wide. Also, by stacking a small number of single cylindrical battery cells to form a battery cell stack, and disposing the stack in the containing cavity of the housing, the number of single cylindrical battery cells is reduced, and glue potting of the small module is realized, thereby the problem of difficulty in potting the whole pack with glue in the CTP structure is solved.

The disclosure proposes a battery module and battery pack, which positions the cylindrical battery cells through the fixing bracket disposed in the module, and the problem of difficulty in positioning of the cylindrical battery cells in the CTP structure is solved, thereby the difficulty of the manufacturing process is reduced. At the same time, the exhaust channel is formed between the fixing bracket and the bottom plate to provide an exhaust channel when the module generates thermal runaway of the battery cell, thereby improving the safety and avoiding affecting battery cells in other modules. In addition, through forming the battery pack by the battery module, when a battery cell in one of the battery modules 100 has a quality problem or thermal runaway, merely the battery module 100 with the problem needs to be repaired or replaced, and the convenience of overall maintenance is improved.

### REFERENCE SIGNS LIST

100 : battery module
10 : housing
11 : bottom plate
12 : side plate
121 : first side plate
122 : second side plate
13 : top plate
14 : end plate
141 : first end plate
142 : second end plate
143 : exhaust slot
144 : low-voltage signal collection terminal
145 : high-voltage output terminal
20 : fixing bracket
21 : positioning groove
211 : through hole
212 : recess
22 : exhaust channel
23 : protrusion structure
30 : battery cell stack
31 : cylindrical battery cell
311: electrode terminal
312 : casing
301 : potting glue
40 : CCS component
50 : serpentine cooling plate
51 : wing plate
52 : sub-plates
501 : inlet water-cooling connector
502 : outlet water-cooling connector

## Claims

1. A battery module (100), comprising:
a housing (10), comprising a bottom plate (11), side plates (12), a top plate (13), and end plates (14), wherein the side plates (12) are arranged on opposite two sides of the bottom plate (11), the end plates (14) are arranged on other two sides of the bottom plate (11), and the top plate (13) is fixedly connected to the side plates (12) and the end plates (14) to enclose and form a containing cavity;
a fixing bracket (20) located in the containing cavity and mounted on the bottom plate (11), wherein a plurality of rows of positioning grooves (21) are disposed on the fixing bracket (20);
a battery cell stack (30), comprising cylindrical battery cells (31) arranged in a plurality of rows, wherein a top portion of each of the cylindrical battery cells (31) is provided with an electrode terminal (311), a bottom portion of each of the cylindrical battery cells (31) is provided with an venting valve, and the bottom portions of the cylindrical battery cells (31) are installed in the positioning grooves (21);
a cell contact system (CCS) component (40), disposed on a side of the battery cell stack (30) close to the top plate (13), and electrically connected to the electrode terminals (311) of the cylindrical battery cells (31); and
a serpentine cooling plate (50) disposed between two rows of cylindrical battery cells (31).

2. The battery module (100) according to claim 1, wherein the side plates (12) and the bottom plate (11)s are an integrated frame structure formed in a U-shape.

3. The battery module (100) according to claim 1, wherein an exhaust channel (22) is formed between the fixing bracket (20) and the bottom plate (11), and the exhaust channel (22) communicates with the positioning grooves (21).

4. The battery module (100) according to claim 3, wherein at least one of the two end plates (14) on the two sides of the bottom plate (11) is provided with an exhaust slot (143), and the exhaust slot (143) communicates with the exhaust channel(22).

5. The battery module (100) according to claim 4, wherein one of the two end plates (14) on the two sides of the bottom plate (11) is provided with a low-voltage signal collection terminal (144), the other of the two end plates (14) on the two sides of the bottom plate (11) is provided with a high-voltage output terminal (145), and the low-voltage signal collection terminal (144) and the high-voltage output terminal (145) are electrically connected to the CCS component (40) respectively.

6. The battery module (100) according to claim 5, wherein the exhaust slot (143) is disposed on the end plate provided with the low-voltage signal collection terminal (144).

7. The battery module (100) according to claim 3, wherein a plurality of protrusion structures (23) are provided on a side of the fixing bracket (20) close to the bottom plate (11), the exhaust channel (22) is formed between adjacent two of the protrusion structures (23) and the bottom plate (11), and the positioning grooves (21) are located between the adjacent two of the protrusion structures (23).

8. The battery module (100) according to claim 1, wherein each of the positioning grooves (21) comprises a through hole (211) and a recess (212), the recess (212) is located on a side of the fixing bracket (20) away from the bottom plate (11), and the recess (212) is arranged around the through hole (211), wherein the bottom portions of the cylindrical battery cells (31) are disposed in the recess (212), and the venting valves correspond to the through holes (211).

9. The battery module (100) according to claim 1, wherein the serpentine cooling plate (50) comprises:
a wing plate (51), wherein a first cooling channel is disposed therein, and the wing plate (51) is disposed between the battery cell stack (30) and the end plate; and
a plurality of sub-plates (52), wherein the plurality of sub-plates (52) are disposed on same side of the wing plate (51) and connected to the wing plate (51), and each of the sub-plates (52) is located between two rows of cylindrical battery cells (31), wherein a second cooling channel is disposed in the sub-plate, and the second cooling channel communicates with the first cooling channel.

10. The battery module (100) according to claim 9, further comprising:
an inlet water-cooling connector (501) and an outlet water-cooling connector (502), wherein
the inlet water-cooling connector (501) and the outlet water-cooling connector (502) are disposed on the wing plate (51), an end of the inlet water-cooling connector (501) and an end of the outlet water-cooling connector (502) pass through the end plate and are located outside of the housing (10), and the other end of the inlet water-cooling connector (501) and the other end of the outlet water-cooling connector (502) communicate with the first cooling channel respectively.

11. A battery pack, comprising at least one battery module (100) according to any one of claims 1 to 10.
